# EUROPEAN PATENT APPLICATION

(11) **EP 1 950 187 A2**
(43) Date of publication of application: **30.07.2008**
(21) Application number: 08398001.1
(22) Date of filing: 22.01.2008
(51) Int. Cl.: C04B 28/18, C04B 40/06

(54) **Mortars suitable for thermic and acoustic isolations comprising cork and aerial lime which is optionally hydrophobized**

(30) Priority: 22.01.2007 PT 10364107
(71) Applicant: Simões Cartaxo, Fernando Raimundo, 2820 - 220 Charneca de Caparica (PT); De Sá Leite Correia da Costa, Pedro Miguel, 2765 - 483 Estoril (PT)
(72) Inventor: Simões Cartaxo, Fernando Raimundo, 2820 - 220 Charneca de Caparica (PT); De Sá Leite Correia da Costa, Pedro Miguel, 2765 - 483 Estoril (PT)
(74) Representative: Nunes, Maria Margarida Gomes Sanches

(57) **Abstract**

Mortars destinated to the execution of the isolations, coatings or filling ups, on which the lightness, thermic or acoustical performance are essential; these mortars are produced with aerial lime hydrofugated or not, natural and artificial pozzuolana, cork and diverse aggregates; after being kneaded, can be used, by direct application or by projection, pre-moulded in the shape of a plaque, bricks, blocks, decorative finishing borders, technical or decorative accessories of adequated shape, with simultaneous application or isolated.

## Description

The invention that is now exhibited concerns to composed mortars which have as main binder the hydrofugate aerial lime or not, to which are always with pozzolanic additions and natural aggregates between them and the cork.

These mortars are specially intended to the accomplishment of the isolations, coatings or filling up's where the lightness and the acoustic or thermal performance are essential factors in indoors and outdoors.

The actual "ETICS" (External Thermal Insulation Composite System), isolation systems or methods known to date and of common and generalized use, are systems with high thermal resistance that maximize the gain of the thermal inertia of the outdoor walls. Nevertheless these systems exhibit a very low permeability to water vapour and their accomplishment covered of high complexity, their placement requiring eight distinct activities: - 1) Mounting of the start and lateral profiles; 2) preparation of the glue; 3) application of the glue; 4) placement of the isolation; 5) reinforcement of the singular points; 6) placement of the armed base layer; 7) placement of the primary layer; 8) placement of the final coating. All these activities used in the application implicate the use of specialized manual work with inevitable costs.

The placement of isolations with the actual "ETICS", on the known systems, is possible only if the zones to be coated exhibit smooth surfaces, reason by which the actual coating systems are of difficult placement in the rehabilitation of degraded buildings, not only because in them the irregularity of the exteriors or interior surfaces has to be firstly repaired with any other method, but also for the difficulty in the finishing execution with the salient elements that exist in the frontages.

The majority of the known solutions which are available in the market, suitable for thermal isolations, employ, in a general way, products or components that are fabricated with polystyrenes or polyurethanes, which, in case of fire, release toxic products because they contain substances, composed basely of bromine, which retards the fire. Therefore, these constituents from mortars or the components that in reality are used in these isolations, constitute, or might present, **risks of impacts which are negatives to the health of the people that inhabit or reside in the buildings.**

Some of the isolation types in use nowadays, employ plaques pre-moulded with mortars, weldings or pastes, but these are made-up using as binder the Portland cement, for its fabrication is required an high energetic consumption of about 1400ºC, also producing, **by negative addition** and for each ton of cement, about 1 ton of CO2 that stay irremediably scattered in the atmosphere.

Another common and inherent problem, are the wastes and remainders generated when the isolations are made with the actual "ETICS" which, because contain plastic substances or common cements, are not recyclable and will occupy high volumetries on the embankments or garbage collectors.

The technical problems already mentioned, as well as others although with less note but also worst of **negative** registration, such as, the limitation of applicability, the difficulty in placement or the occupation of the parking place of the products and accessories at the work zone, are resolved or rather minimized by the use of the mortars of this invention.

The mortars that are presented now have as main components, the aerial lime as binder and the cork as thermic insulation or other aggregates, being, all of them, products with optimum ecological performance.

The aerial lime is produced through calcium carbonate in kilns where the maximum temperature attained is 900ºC, but the CO2 released to the atmosphere in the fabrication phase is totally reintegrated in the hardening process of the final product; while, as it was said before, the fabrication of the Portland cement, excluded from de mortars of this invention, require temperatures in the order of 1400ºC and, for each 1 ton of cement produced, generate about 1 ton of CO2 that being not reintegrated is scattered by the atmosphere.

The other element always present in the formulation of this new invention, is the cork, a renewed and totally recycled which, contrarily to the inflammable products made of polystyrenes or polyurethanes used in the known isolations, belongs to the class M1 (non-inflammable), fire factor still improved by the mineralization to which is conferred by the aerial lime.
To the these new mortars components already designated, are yet added other components which function is to adjust better and adequate their performances to several purposes. There are, in this case, the sodium silicate and caustic soda, the sand, fibres and thermal isolation materials, vegetables, animals, synthetics and minerals.

The waste products or remainders resultant from the application of the mortars of this invention, or resultant from the moulds produced with them, after being conveniently triturated, can once more be incorporated as aggregates in this or in other type of similar mortar.

Therefore, these new mortars make possible a conjunct of ecological solutions, with technical performances inaccessible by the actual technical solutions.

The isolations, coatings or filling ups processed with the mortars of this invention could be contained trough the projection in work of these pre-dosed mortars, over a hold up or cork plaques previously fixed, or by the utilization of plaques, bricks or blocks, carried out in factory by its moulding.

With the mortars of this invention and by means of simplified processes it can be produced: urban or indoor furniture, accessories or technical or decorative finishing borders, turning-ceilings or still pieces used for highway sound protection, impact energy dissipaters, or pieces of any geometric configuration which allow coating or raising of walls of indoor or outdoor partitions.

These new mortars allow the implementation of exterior isolations or every cases of new buildings constructions or rehabilitation.

The application system of this invention remains simplified by the reduction of phases, being applicable in regular and irregular surfaces, by mechanic or manual projection, using only 2 or 3 types of materials (the new mortar, thermal isolating plaques and coating based on aerial hydrofugated lime, which applies by 3 distinct processes:
1^{st} process, to apply over regular or irregular surfaces consisting of 2 phases: (1^{st} phase) direct projection of the new mortar to the stand and (2^{nd} phase) placement of rough-cast;
2^{nd} process, to apply over irregular surfaces in cases where the high thermic resistance of the coating is a decisive factor (the cork presents an λ=0.04 W/m.ºC identical to the λ of the synthetically isolations and the λ of the new mortar has a value close to 0.15 W/m.ºC), consisting of 4 phases: (1^{st} phase) direct projection of the new mortar for regularization of the stand, (2^{nd} phase) posterior mechanical fixation of the thermic insulation plaque, (3^{rd} phase) projection of the second layer of the new mortar under the isolation and (4^{th} phase) placement of rough-cast;
3^{rd} process, to apply over regular surfaces in cases where the high thermal resistance of the coating is a decisive factor, consisting o 3 phases: (1^{st} phase) mechanics fixations of the thermic insulation plaque over stand, (2^{nd} phase) projection of mortar under the isolation and (3^{rd} phase) placement of rough-cast.

In every cases it is verified the simplification of procedures of the mortar preparation and its application. Lower the number of phases, lower is the probability of bad execution demanding less technical knowledge's to its performer, being only necessary an ordinary concrete mill (mixer), mechanic system for projection, or manual performance (these mortars are extremely easy to work with; have high tixotropy; adhere perfectly to material of current use under construction; harden without relief tractions and raise the protection checked to the coarse of the walls face to the atmospheric agents solicitations). In the case of mechanic fixation of the coating, whenever necessary, is similar to the system "ETICS", needing, however, of ends in the joints because they posteriorly receive mortar.

The use of aerial lime is associated to the absence of fissured by traction restricted of the rough-cast, as well as to the diversity of the finishing's. Likewise, the absence of discontinuity of the isolated layer is assured.

The permeability to the water steam is one of the fundamental characteristics of the new mortar (presents a coefficient of resistance to the steam water diffusion about 10 times better than the existent in actual systems (mean values of µ=18 against µ=190)).

It is always referred, when the actual solutions are fomented, that there is no formation of condensations in the exterior face of the existing wall, given that the thermal isolation, conferred to the synthetic plaques, does not allow the formation of the dew point.

What is not normally referred is that the steam water produced on the space inhabited remains retained on it, manifesting in discomfort associated to high relative humidity's, aggravating the coming into sight of fungi. Also here, has it been shown in the anterior paragraph, the new mortar is indeed the solution.

### HYDROFUGATION AND THE THERMIC PERFORMANCE

Comparing, on the other way, the behaviour of an exterior rough-cast which contains the new mortar with one containing Portland cement, with or without cork, we verify that the hydrofugation of the new mortar (that in this case is assured by the introduction of an sub product of the olive oil in the process of Fabrication of the aerial lime) does not allow, contrarily to the other, that the air initially existent in the coating, will come to be substituted by water (the λ=0.6 W/m. ºC of the water is 25 times worst than the air, λ=0.024 W/m.ºC). This behaviour has evident reflections on the energetic consumptions of the heating and cooling of the inhabited space.

In this context, it is important to state that one of the cork characteristics is its high water absorption, although this process runs away very slowly. The association of the cork with the mortar of hydrofugated lime turns unfeasible this entrance process of the water into the cork, maintaining, constant throughout the years, its excellent thermic isolation capacities. In the same meaning, we assert that the little water that the cork could absorb in the bump process will be eliminated by evaporation given the high permeability to steam waters that the hydrofuge mortars of aerial lime presents.

### ACOUSTICAL BEHAVIOUR

In what it concerns to acoustical behaviour, we start to analyse the acoustical isolation which, as it is known, is function of the superficial density being known, on the other way, the positive contribution that an absorbent material performs here, for instance, associated to a brick or to plaques of gypsum in boards in the formation of the compound walls.

The new mortar allows, through adequate dosage, an increase of its apparent specific mass, and therefore of its superficial density, presenting on the other side de advantage to incorporate cork grains of several granulometries which perform the role of an absorbent material, on compound walls, as referred in the previous paragraph. To conclude, the reference to the acoustic behaviour, we underline, in the slope of the acoustic absorption, which the lime mortar association to the cork, of several granulometries, extend the good behaviour of the cork, to the medium and low frequency ranges.

### LIGHTNESS

Another application field of the new mortar is related with the possibility of obtaining apparent specific masses inferiors to 300kg/m3 coexisting with the adequate mechanical behaviours, resultant from the introduction of the lime, of pozzuolana and of alkaline activators associated to silica correctors. It is reported that the lime has a specific weight a great deal inferior to the type Portland cement (of 500kg/m3 to 1200kg/m3). With this mortar we have raw material to carry out light filling up's for the new construction or rehabilitation, production of premoulded (blocks, plaques, turning-ceilings, etc.) with consequent cost decrease of the building structure, exhibiting these materials good characteristics of thermal and acoustical isolation.

### BEHAVIOUR TO TRACTION

The addition of vegetal, animal, synthetical or mineral fibres to the aerial mortar, additive and cork, confer it suitable resistance to traction tensions, allowing the utilization on moulded pieces, where these tensions are determinants, either by its own geometry as it is the case of the plaques, either for the foreseen utilizations such as the case of the dissipaters of the impact energy to be used in the Transport systems security equipments.
All formulations previously pronounced with the new mortar could form complex structures with thermic and acoustic isolation plaques, even with exterior elements that are resistant's to traction.

### CHARACTERISTICS OF THESE MORTARS

### Consistency:

Pasty

### Colour:

White rosy or greyish conferred by the cork powder

### Specific weight:

Variable from 250kg/m3 to 1600kg/m3 after drying

### Mixture PH:

Alkaline

### Resistance to compression:

Variable accordingly to the formulations of each product

### Specific weight:

Variable from 250kg/m3 to 1600kg/m3 after drying

### Thermic transmition coefficient:

Variable, in average is 0.15 W/m.ºC

### Weight:

Big bag with about 750L: from 250kg to 945kg
On the remoulded weight is variable

### Acoustic absorption:

The association of the lime mortar to the cork, of several granulometries, extends the good behaviour of the cork to the low and medium frequencies. Variable from 0.15 to 0.95

### Security in fire risks:

M1 is the class to the cork fire (non inflammable), still improved by the mineralization that it is conferred to it by the aerial lime.

### Ecologicals:

In the hardening process, reabsortion of CO2 produced in the Fabrication of the aerial lime

The cork is a natural product and totally recyclable which induce to energetic thrifts on the heating and cooling processes.

### Conservation of the components:

Without limit, as long as it is conditioned in closed packages

### RECOMMENDATIONS

### Time for utilization after mixture:

Products without caustic soda - in average 3 days, according to the atmospheric conditions
Products with caustic soda - 1 hour

### Products without caustic soda:

The stand must be compact, quit of dust and incoherent parts, fat, oils, glues, conveniently moistened and/or being the target of previous accomplishment of speck.

### Temperature application:

Between +5ºC and 45ºC

### PREPARATION OF THE PRODUTS

### Binders used in this invention:

The stand must be compact, quit of dust and incoherent parts, fat, oils, glues,
• **L1** Aerial pasty lime on hydrofugated - Main binder, with hardening through carbonation, ecologic, guarantee of labour, hydrofugation, permeability to steam water and lightness.
• **L2** Aerial pasty lime on non hydrofugated - Main binder, hardening through carbonisation, ecologic, guarantee of labour, permeability to steam water and lightness.
• **L3** Micronized quicklime.
• **L4** Natural or artificial pozzuolana- promote complementary hardening to the aerial lime carbonisation.
• **L5** Sodium silicate - Raise the reactive silica contents.
• **L6** Caustic soda - Alkaline activator.

### Aggregations used in this invention:

• **A1** Cork with "three different types of volumetry" - Main aggregation and guarantees the thermic isolation behaviour, acoustic absorption and lightness
• **A2** Sand - guarantees the weight control and contributes to the mechanical resistance
**• A3** Vegetal and animal fibres (coconut fibre, hemp, straw, linen, wool, of wood) - guarantee the resistance to traction
• **A4** Mineral fibres (rock wool, glass wool, polymer) - guarantee the resistance to traction

### Fabrication process:

In a mixer preferentially with vertical axis, in movement, will be spilled the quantities A1, A2, A3, A4, A5 and L1 or L2 required for each one of the formulations, following the mixture during the time necessary to contain a perfect homogeneity. In this manner are contained the mortars base to the several products:
These mortars already contain, in this way, a significant part of the components, surely those that occupy larger volume and, given that do not contain hydraulic binders, they do not harden neither dry if they are protected from the air. On the other side, they present the humidity contents necessary to non production of dust.
When it is aimed to contain moulded products, to this mortars-base will be added into the mixer, in the metric, the remaining components accordingly with the formulations of each product and potable water, following the complete mixture, moulding, moulding down, cure and storage.
When it is aimed to contain pre-dosed mortars for the projection of the products in work, the mortars-base could be spilled into closed 750 liters plastic, enclosed in containers. Inside each of these containers will, equally, be enclosed the remaining components corresponding to the mortar-base quantity and accordingly with the formulations of each product. In the construction site in a concrete mill will be, then, achieved the mixture of the mortar-base with the rest of the components and potable water, in the accurate proportions.

### DESCRIPTION OF THE FIGURES

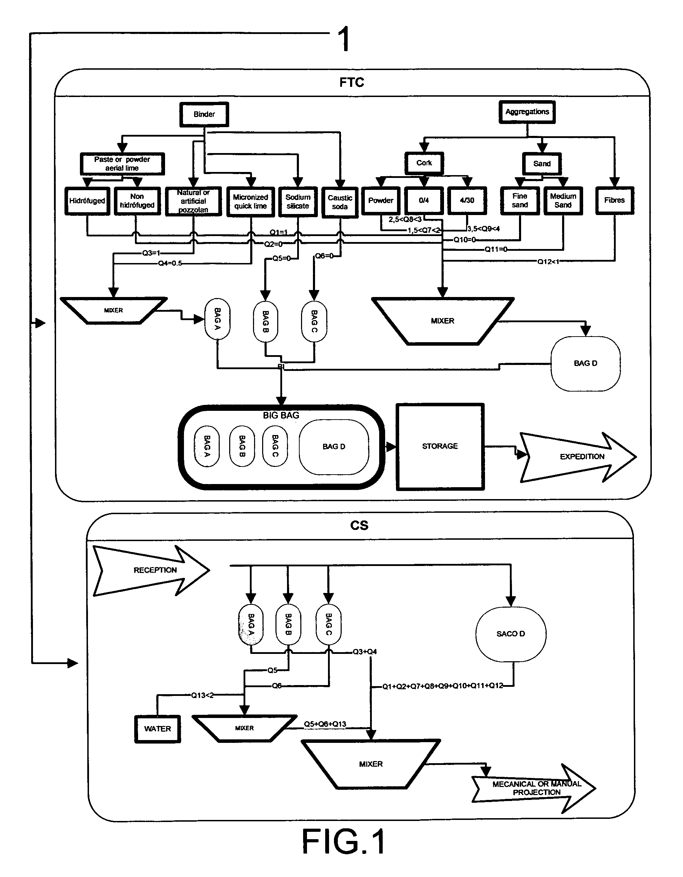

**FCT** = Factory = superior board; **CS** = construction site = inferior board
**FIG. 1** **Diagram of the procedure system of the MIXTURE 1**
   The process begins in factory (FCT), with 2 mixture separated lines, such as:
   **1st Line -** Natural or artificial pozzuolana in the quantity of 1 volume added to Micronized quicklime in the quantity of 0.5 volumes, which mixture will be contained in the bag A.
   **2nd Line** - Hidr6fuge aerial lime in paste or in powder, in the quantity of 1 volume, added to powder cork in the quantity between 1.5 to 2 volumes, added to a cork with a range of 0mm to 4mm, in the quantity between 2.5 and 3 volumes, added to a cork with a range of 4mm and 30mm in the quantity 3.5 volumes to 4 volumes, added to fibres in the quantity less than 1 volume, all mixture, whose final product will be contained in the bag D.
   Bags A and D will be placed suitable in a single container to be putted in storage and to be dispatched to the construction site.
   On construction site (CS), in a mixer, the contents of the bags A and D will be spilled, and will be added water in quantity less than 2 volumes. After homogenisation of the mortar, its mechanical or manual projection will take place.

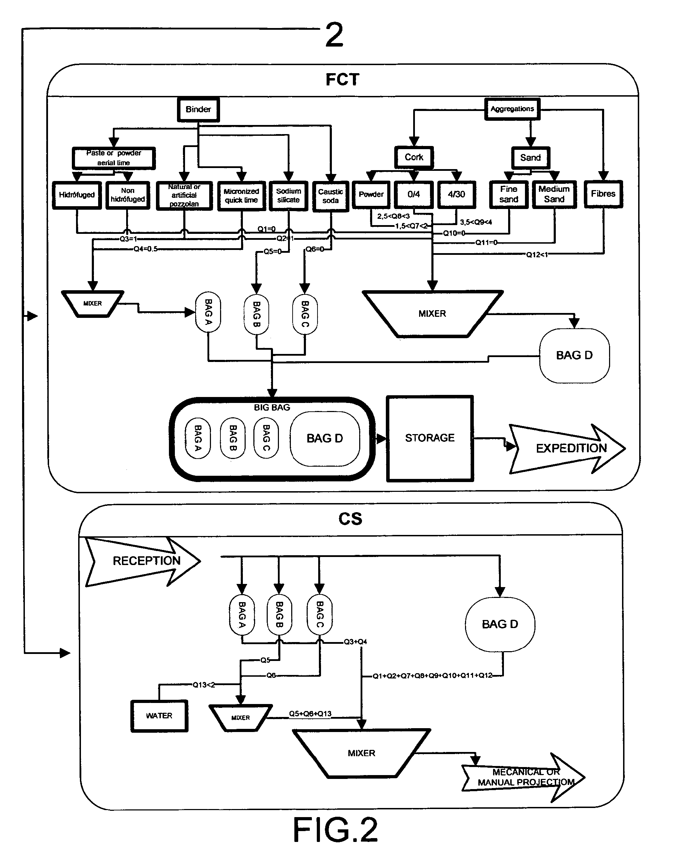

**FIG. 2** **Diagram of the procedure system of the MIXTURE 2**
   The process begins **in factory** (FCT), with 2 mixture separated lines, such as:
   **1st Line** - Natural or artificial pozzuolana in the quantity of 1 volume added to micronized quicklime in the quantity of 0.5 volumes, which mixture will be contained in the bag A.
   **2nd Line -** Non-hidrófuge aerial lime in paste or in powder, in the quantity of 1 volume, added to powder cork in the quantity between 1.5 to 2 volumes, added to a cork with a range of 0mm to 4mm, in the quantity between 2.5 and 3 volumes, added to a cork with a range of 4mm and 30mm in the quantity 3.5 volumes to 4 volumes, added to fibres in the quantity less than 1 volume, all mixture, whose final product will be contained in the bag D.
   Bags A and D will be placed suitable in a single container to be putted in storage and to be dispatched to the construction site
   On construction site (CS), in a mixer, the contents of the bags A and D will be spilled, and will be added water in quantity less than 2 volumes. After homogenization of the mortar, its mechanical or manual projection will take place.

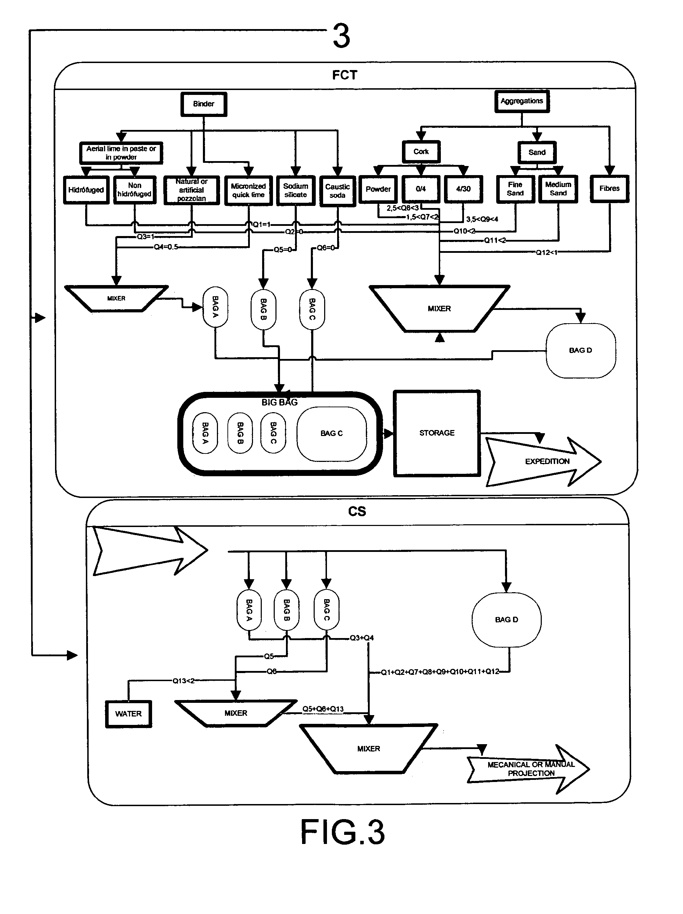

**FIG. 3** **Diagram of the procedure system of the MIXTURE 3**
   The process begins in factory (FCT), with 2 mixture separated lines, such as:
   **1st Line -** Natural or artificial pozzuolana in the quantity of 1 volume added to micronized quicklime in the quantity of 0.5 volumes, which mixture will be contained in the bag A.
   **2nd Line -** Hidrófuge aerial lime in paste or in powder, in the quantity of 1 volume, added to powder cork in the quantity between 1.5 to 2 volumes, added to a cork with a range of 0mm to 4mm, in the quantity between 2.5 and 3 volumes, added to a cork with a range of 4mm and 30mm in the quantity 3.5 volumes to 4 volumes, added to fine sand in the quantity less than 2 volumes, added to medium sand in the quantity less than 2 volumes, and added to fibres in the quantity less than 1 volume, all mixture, whose final product will be contained in the bag D.
   On construction site (CS), in a mixer, the contents of the bags A and D will be spilled, and will be added water in quantity less than 2 volumes. After homogenization of the mortar, its mechanical or manual projection will take place.

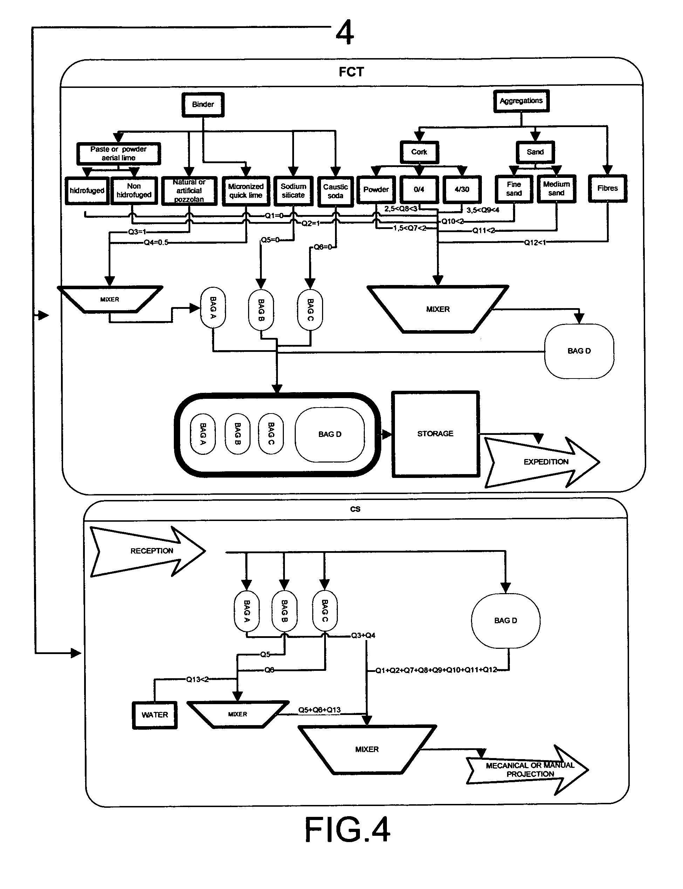

**FIG. 4** **Diagram of the procedure system of the MIXTURE 4**
   The process begins in factory (FCT), with 2 mixture separated lines, such as:
   **1st Line** - Natural or artificial pozzuolana in the quantity of 1 volume added to Micronized quicklime in the quantity of 0.5 volumes, which mixture will be contained in the bag A.
   **2nd Line -** Non-hidrófuge aerial lime in paste or in powder, in the quantity of 1 volume, added to powder cork in the quantity between 1.5 to 2 volumes, added to a cork with a range of 0mm to 4mm, in the quantity between 2.5 and 3 volumes, added to a cork with a range of 4mm and 30mm in the quantity between 3.5 to 4 volumes, added to fine sand in the quantity less than 2 volumes, added to medium sand in the quantity less than 2 volumes, and added to fibres in the quantity less than 1 volume, all mixture, whose final product will be contained in the bag D.
   On construction site (CS), in a mixer, the contents of the bags A and D will be spilled, and will be added water in quantity less than 2 volumes. After homogenization of the mortar, its mechanical or manual projection will take place.

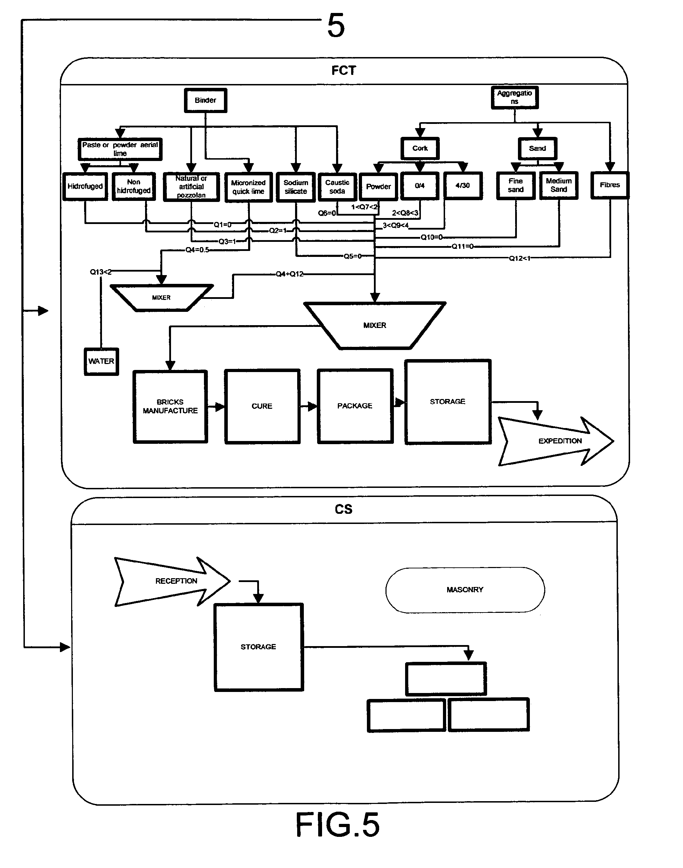

**FIG. 5** **Diagram of the procedure system of the MIXTURE 5**
   The process begins **in factory** (FCT), in a first mixer, where it is spilled micronized lime in the quantity of 0.5 volumes, to which water is added in a volume less than 2. The result of this mixture ill be spilled into a second mixer together with non-hydrofuge aerial lime in paste or in powder, in the quantity of 1 volume, added to natural or artificial pozzuolana in the quantity of 1 volume, added to powder cork in the quantity between 1 to 2 volumes, added to a cork with a range of 0mm to 4mm, in the quantity between 2 and 3 volumes, added to a cork with a range of 4mm and 30mm in the quantity 3 volumes to 4 volumes, and added to fibres in the quantity less than 1 volume, all mixture, whose final product will be spilled into moulds with the correct dimensions which after de-moulding, cure, packing and storage, will be dispatched to the construction site
   On construction site (CS) will be carried out appropriate actions suitable to masonry and fixing.

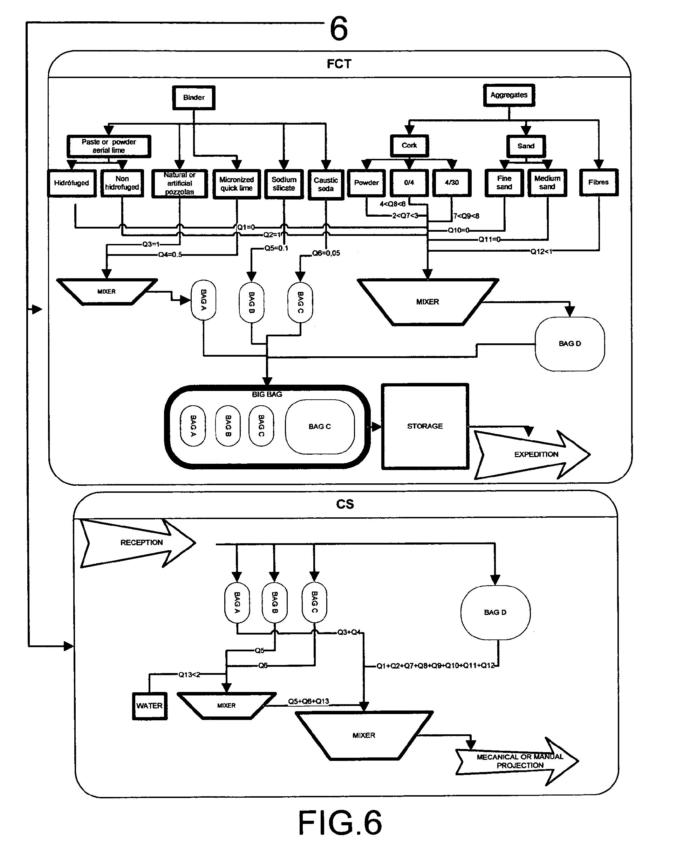

**FIG. 6** **Diagram of the procedure system of the MIXTURE 6**
   The process begins **in factory** (FCT), with 2 mixture separated lines, such as:
   **1st Line -** Natural or artificial pozzuolana in the quantity of 1 volume added to micronized quicklime in the quantity of 0.5 volumes, which mixture will be contained in the bag A.
   **2nd Line -** Non-hidrófuge aerial lime in paste or in powder, in the quantity of 1 volume, added to powder cork in the quantity between 2 to 3 volumes, added to a cork with a range of 0mm to 4mm, in the quantity between 4 and 6 volumes, added to a cork with a range of 4mm and 30mm in the quantity between 7 to 8 volumes, and added to fibres in the quantity less than 1 volume, all mixture, whose final product will be contained in the bag D.
   The sodium silicate in the quantity of 0.1 volumes will be suitable placed in the bag B.
   Caustic soda in the quantity of 0.05 volumes will be suitable placed in the bag C.
   The bags A, B, C, and D will be suitable placed in a single container which is to be putted in storage and to be dispatched to the construction site
   On construction site (CS), in a 1^{st} mixer, the contents of the bags B and C to which will be added water in a quantity less than 2 volumes, the result of this mixture will be spilled together with the content of the bag A and D in a 2^{nd} mixer.
   After homogenization of the mortar, its mechanical or manual projection will take place.

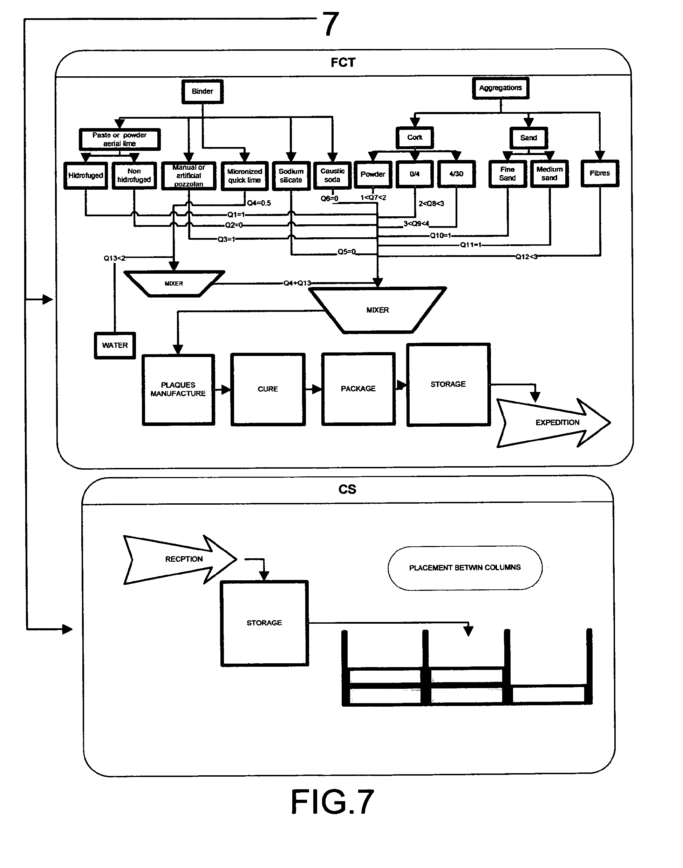

**FIG. 7** **Diagram of the procedure system of the MIXTURE 7**
   The process begins **in factory** (FCT), where in a 1st mixer it is spilled micronized quicklime in the quantity of 0.5 volumes to which is added water in a volume less than 2. The result of this mixture will be spilled to 2^{nd} mixer jointly with hidrófuge aerial lime in paste or in powder in the quantity of 1 volume, added the natural or artificial pozzuolana in the quantity of 1 volume, added powder cork in the quantity between 1 to 2 volumes, added cork with a range of 0mm to 4mm, in the quantity between 2 and 3 volumes, added cork with a range of 4mm and 30mm in the quantity between 3 to 4 volumes, and added fibres in the quantity less than 3 volumes, all mixture, whose final product will be spilled into moulds with the correct dimensions which after un-moulding, cure, packing and storage, will be dispatched to the construction site
   On construction site (CS) will be carried out appropriate actions suitable to masonry and fixing.

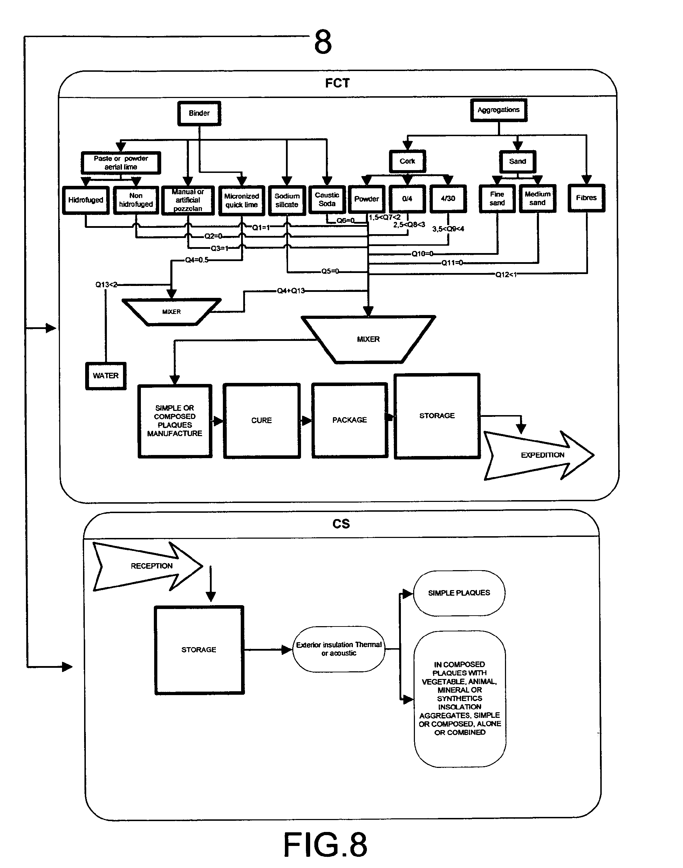

**FIG. 8** **Diagram of the procedure system of the MIXTURE 8**
   The process begins **in factory** (FCT), where in a 1st mixer it is spilled micronized quicklime in the quantity of 0.5 volumes to which is added water in a volume less than 2. The result of this mixture will be spilled to 2^{nd} mixer jointly with hidrófuge aerial lime in paste or in powder in the quantity of 1 volume, added the natural or artificial pozzuolana in the quantity of 1 volume, added powder cork in the quantity between 1.5 to 2 volumes, added cork with a range of 0mm to 4mm, in the quantity between 2.5 and 3 volumes, added cork with a range of 4mm and 30mm in the quantity between 3.5 to 4 volumes, and added fibres in the quantity less than 1 volume, all mixture, whose final product will be spilled into moulds which allow the fabrication of simple or compound plaques, with the correct dimensions which after un-moulding, cure, packing and storage, will be dispatched to the construction site
   On construction site (CS) will be carried out appropriate actions suitable to masonry and fixing.

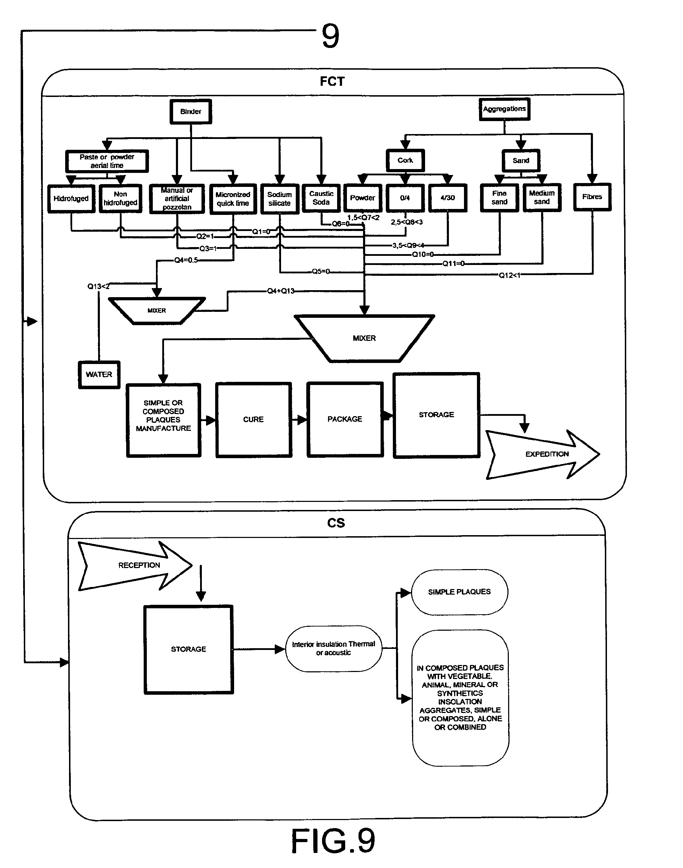

**FIG. 9** **Diagram of the procedure system of the MIXTURE 9**
   The process begins **in factory** (FCT), where in a 1st mixer it is spilled micronized quicklime in the quantity of 0.5 volumes to which is added water in a volume less than 2. The result of this mixture will be spilled to 2^{nd} mixer jointly with non-hidrófuge aerial lime in paste or in powder in the quantity of 1 volume, added the natural or artificial pozzuolana in the quantity of 1 volume, added powder cork in the quantity between 1.5 to 2 volumes, added cork with a range of 0mm to 4mm, in the quantity between 2.5 and 3 volumes, added cork with a range of 4mm and 30mm in the quantity between 3.5 to 4 volumes, and added fibres in the quantity less than 1 volume, all mixture, whose final product will be spilled into moulds which the final product will be spilled into moulds which allow the fabrication of simple or compound plaques, with the correct dimensions which after un-moulding, cure, packing and storage, will be dispatched to the construction site
   On construction site (CS) will be carried out appropriate actions suitable to masonry and fixing.

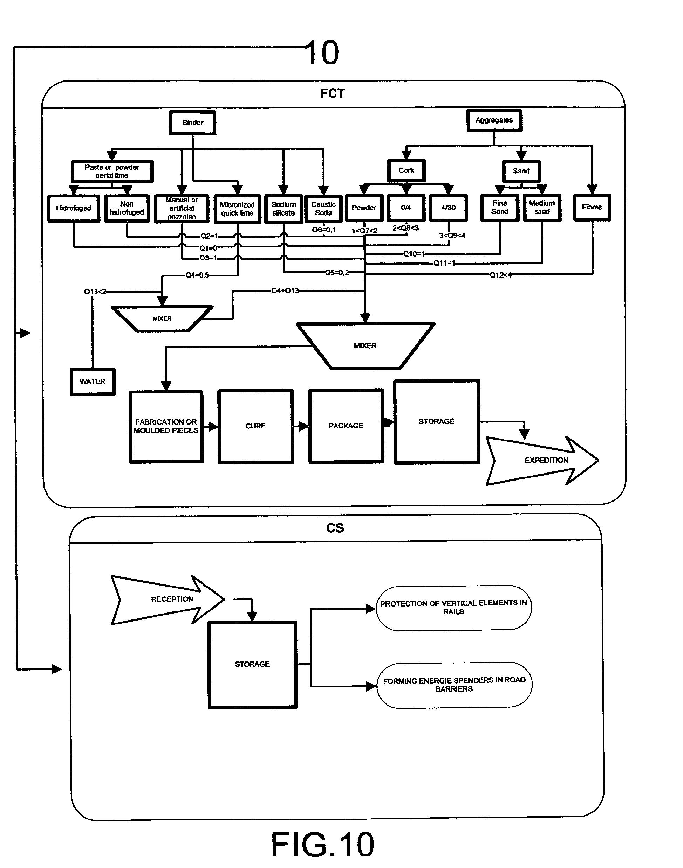

**FIG. 10** **Diagram of the procedure system of the MIXTURE 10**
   The process begins **in factory** (FCT), where in a 1st mixer it is spilled micronized quicklime in the quantity of 0.5 volumes to which is added water in a volume less than 2. The result of this mixture will be spilled to 2^{nd} mixer jointly with non-hidrófuge aerial lime in paste or in powder in the quantity of 1 volume, added the natural or artificial pozzuolana in the quantity of 1 volume, added sodium silicate in the quantity of 0.2 volumes, added caustic soda in the quantity of 0.1, added powder cork in the quantity between 1 to 2 volumes, added cork with a range of 0mm to 4mm, in the quantity between 2 and 3 volumes, added cork with a range of 4mm and 30mm in the quantity between 3 to 4 volumes, added fine sand in the quantity of 1 volume, added medium sand in the quantity of 1 volume and added fibres in the quantity less than 4 volumes, all mixture, whose final product will be spilled into moulds which the final product will be spilled into moulds which allow the fabrication of simple or compound plaques, with the correct dimensions which after un-moulding, cure, packing and storage, will be dispatched to the construction site
   On construction site (CS) will be carried out appropriate actions suitable to masonry and fixing.

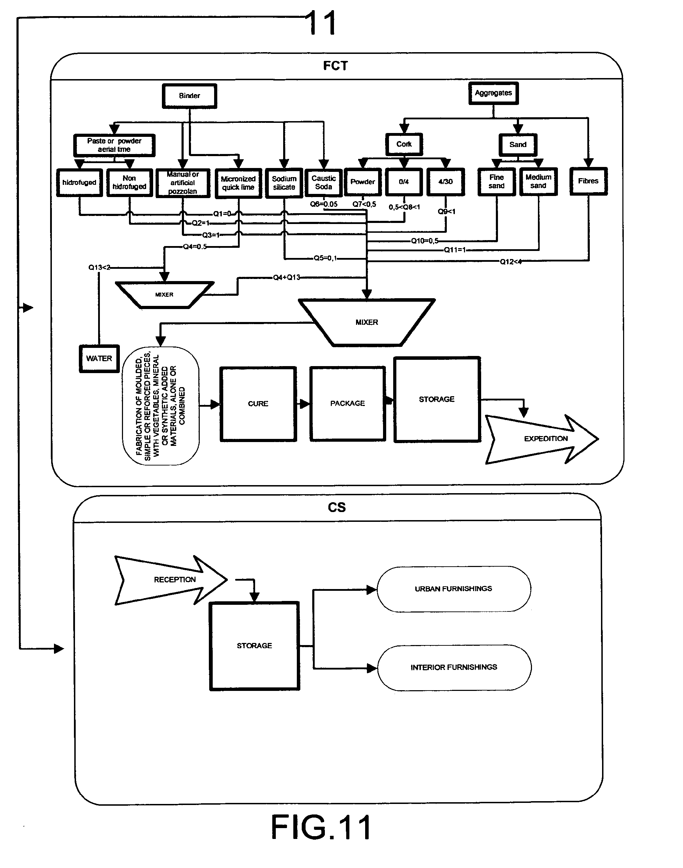

**FIG. 11** **Diagram of the procedure system of the MIXTURE 11**
   The process begins **in factory** (FCT), where in a 1st mixer it is spilled micronized quicklime in the quantity of 0.5 volumes to which is added water in a volume less than 2. The result of this mixture will be spilled to 2^{nd} mixer jointly with non-hidrófuge aerial lime in paste or in powder in the quantity of 1 volume, added the natural or artificial pozzuolana in the quantity of 1 volume, added sodium silicate in the quantity of 0.1 volumes, added caustic soda in the quantity of 0.05, added powder cork in the quantity until 0.5 volumes, added cork with a range of 0mm to 4mm, in the quantity between 0.5 and 1 volumes, added cork with a range of 4mm and 30mm in the quantity until 1 volume, added fine sand in the quantity of 0.5 volume, added medium sand in the quantity of 1 volume and added fibres in the quantity less than 4 volumes, all mixture, whose final product will be spilled into moulds which the final product will be spilled into moulds which allow the fabrication of simple or compound plaques, with the correct dimensions which after un-moulding, cure, packing and storage, will be dispatched to the construction site
   On construction site (CS) will be carried out appropriate actions suitable to masonry and fixing.

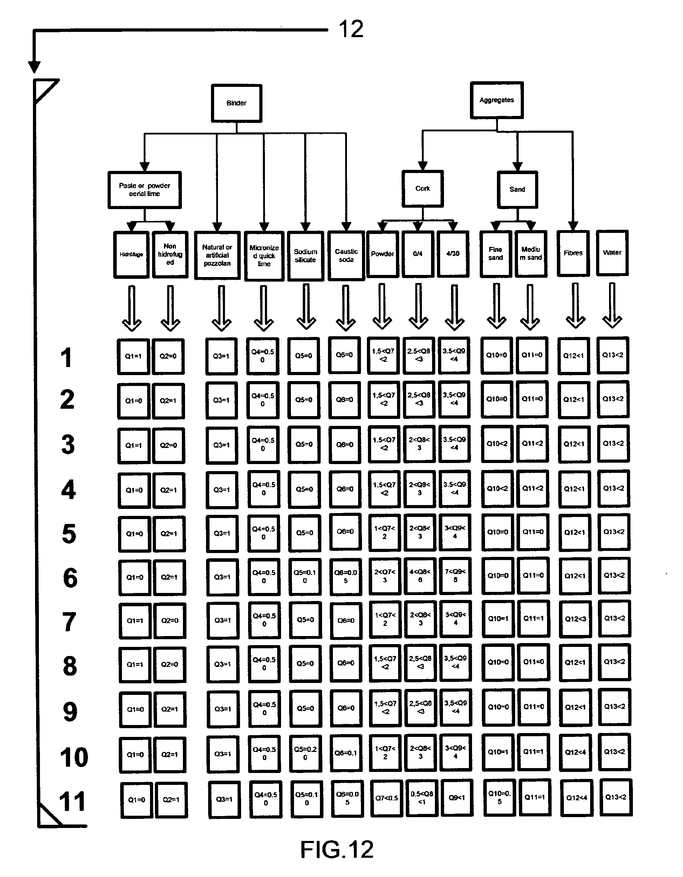

**FIG. 12** **Quantitative and qualitative schematization of the products used on the eleven mixtures.**

**DESCRIPTIVE TABLE OF THE APPLICATION AND USE OF THE 11 DIFFERENT MIXTURES**

| MIXTURE nº | TYPE | APPLICATION |
|---|---|---|
| 1 | Hydrofugated mortar pre-dosed with special thermic behaviour | Exterior coatings (walls, coverings and base for a tiled floor) |
| 2 | Non-hydrofugated mortar pre-dosed with special thermic behaviour | Interior coatings (walls and pavements) |
| 3 | Hydrofugated mortar pre-dosed with special acoustic behaviour | Exterior coatings (walls, coverings and filling ups) |
| 4 | Non-hydrofugated mortar pre-dosed with special acoustic behaviour | Interior coatings (walls and filling ups) |
| 5 | Moulded in brick shape | In stone works |
| 6 | Light pre-dosed mortar to be layed on the horizontal | Filling ups |
| 7 | Mortar with special acoustical behavior | Acoustical highways, railways and airoportuaries barriers |
| 8 | Hidrófuge moulded to be layed on unwrapped surfaces | Exterior coatings |
| 9 | Non-hydrofugated moulded to be layed on unwrapped surfaces | Interior coatings |
| 10 | moulded spendthrift of kinetic energy | Highway security |
| 11 | Mould with high resistance to traction and compression | Urban and interior furniture |

## Claims

1. MORTARS SUITABLE FOR THERMIC AND ACOUSTIC ISOLATIONS, WITH HYDROFUGATED AERIAL LIME OR NOT, WITH INCORPORATED CORK, appropriate for the execution of isolations, contains, filling ups or components moulding, **characterized by**, not containing, in any case, "Portland" cement or hydraulic lime, being always produced with natural and artificial pozzuolana, aerial lime hydrofugated or not and incorporated cork, being able to add, to these mortars, natural or synthetical fibers, sand, micronized quicklime, alkaline activator (caustic soda), corrector of active silica (sodium silicate) and other natural or artificial isolations, accordingly to the requested performances for each of the eleven mixtures presented.

2. Mortars that, accordingly to the claiming n.º 1, are **characterized by** being used in exterior and interior isolations, in regular or irregular surfaces, where the performances lightness, acoustic and thermic are considered essential factors, allowing the filling up or isolation processes to be carried out by traditional manual application, by projection under the form of pre-dosed mortar, by application in pre-moulded fabricated with the same mortar or mixed application.

3. Mortars that, accordingly to the claims n.º 1 and 2, are **characterized by** being introduced to the final user and to the pre-moulded factories in eleven types of mixtures pre-defined, and containing some humidity being distinguished and adequated for different uses and applications, but, each one, constituted by different percentages and different granulometries of the same constituted components.

4. Mortars that, accordingly to the claims n.º 1, 2 and 3, are **characterized by** the mixtures (1), (2), (3), (4) and (6), unitarily prepared in fabrics, being presented to the final user or in the commercial circuit, inside a container containing four closed bags, without contact with the air and with alphabetical identification distinguishable (A, B, C e D), containing each bag one or more components of the mortar, holding the bag (A) the pozzuolana and micronized quicklime, the bag (B) the sodium silicate, the bag (C) the caustic soda, and the bag(D), the one with the biggest volume, the aggregated that could be fibers, sand, cork or other mineral o natural isolations, being the varieties of the aggregates previously mixed with aerial lime hidrófuga or non-hidrófuga, for regular use of the mortars of the mixtures (1), (2), (3), (4) e (6), the components of the bags (A), (B), (C) e (D) could be mixed and kneads on the local of the construction site by traditional method or by mechanical mixer during the necessary time to contain a perfect homogeneity, adding potable water in adequated volume to the application finality, to the available time for the execution of the work, humidity conditions of the stand where the mortar is going to be used, or of the humidity of the local environment.

5. Mortars that, accordingly to the claims n.º 1, 2 and 3, are **characterized by** the mixtures (5), (7), (8), (9), (10) e (11), being presented to the final user, after kneading, moulding and drying in the factory where, with simplified processes, it could be produced urban or interior furniture, accessories or technical or decorative finishing borders, turning ceilings, pieces for highway sounding protection, dissipaters of impact energy, or pieces any o any geometric configuration that allow coating, lifting walls or interior or exterior partitions.

6. Mortars that, accordingly to the claims n . º 1, 2, 3, 4 and 5, are **characterized by** maintaining actives for limitless time, in perfect conditions and ready to be kneaded, while the components maintains isolated and conditioned in the container on the respective bags A, B, C e D, non damaged and isolated from the air.

7. Mortars that, accordingly to the claims n. º 1, 2, 3, 4 and 5, are **characterized by**, after being kneaded, the mixtures without caustic soda have an utilization time slightly above the 24 hours while the mixtures with caustic soda have an utilization time of about 1 hour.

8. Mortars that, accordingly to the claims n. º 1, 2, 3, 4 and 5, are **characterized by**, after being kneaded, present consistence of paste, colour white rosy darkened, or dark grey when it is added cork powder, and, after drying, either the mortars applied manually or by mechanic projection, such as those used in plaques or pre-moulded of any shape, present in its natural colour, light-coloured rose or grey, that could be modified in the kneading act.

9. Mortars that, accordingly to the claims n.º 1, 2, 3, 4 and 5, are **characterized by**, after drying, not only the mortars but also the pre-moulded, that are fabricated with them, being permeable to steam water and by presenting low values of permeability to the water in the liquid state when, in them, it is used the hydrofugated lime.

10. Mortars that, accordingly to the claims n.º 1, 2, 3, 4 and 5, are **characterized by**, being non-inflammable and for presenting a good acoustic absorption due to the association of the mortar lime to the cork in several granulometries which extend the acoustic absorption behaviour that is variable from a medium to a low frequencies ranges, between 0,15 and 0,95.

11. Mortars that, accordingly to the claims n. º 1, 2, 3, 4 and 5, are **characterized by**, after drying, not only the mortars but also the pre-moulded, that are fabricated with them, showing an apparent volumetric mass between 250 kg/m³ and 1600Kg/m³ and a thermic conductibility coefficient value of 0,11W/m/ºC in average.
